# EUROPÄISCHE PATENTANMELDUNG

(11) **EP 0 899 394 A2**
(43) Veröffentlichungstag der Anmeldung: **03.03.1999**
(21) Anmeldenummer: 98115475.0
(22) Anmeldetag: 18.08.1998
(51) Int. Cl.: E04D 13/14, E04D 13/147

(54) **Dichtmanschette für Rohrdurchführungen an Dachflächen**

(30) Priorität: 25.08.1997 AT 1420/97
(71) Anmelder: Dätwyler AG Gummi- und Kunststoffe, 6467 Schattdorf (CH)
(72) Erfinder: Herwegh, Norbert, 6345 Beckenried (CH); Ott, Kurt, 5453 Remtschwil (CH)
(74) Vertreter: Hefel, Herbert, Dipl.-Ing.

(57) **Zusammenfassung**

Die Dichtmanschette dient für Rohrdurchführungen an Dachflächen. Sie besitzt einen Hohlkegel zur Aufnahme des Rohres und einen ringförmigen Basisteil zur Festlegung der Dichtmanschette am Rand einer in einer Metall- oder Kunststoffplatte vorgesehenen kreisrunden Öffnung. Hohlkegel und Basisteil sind aus einem elastomeren oder thermoplastischen Werkstoff gefertigt und einstückig ausgebildet. Der Basisteil weist eine umlaufende Ausnehmung (4) auf und der oberhalb der Ausnehmung liegende Abschnitt bildet eine umlaufende Dichtlippe. Die Ausnehmung (4) ist im Querschnitt schlitzförmig gestaltet mit einer nach außen gerichteten Schlitzöffnung. Die gedachte Mittelebene (E) dieser im Querschnitt schlitzförmigen Ausnehmung (4) ist im wesentlichen rechtwinkelig zur Mittelachse (5) des Hohlkegels (1) angeordnet. Die Dichtlippe (7) ragt über die schlitzförmige Ausnehmung (4) hinaus, wobei sich deren freier äußerer Rand über die Schlitzöffnung erstreckt.

## Beschreibung

Die Erfindung bezieht sich auf eine Dichtmanschette für Rohrdurchführungen an Dachflächen nach den Merkmalen des Oberbegriffes des Patentanspruches 1.

Bei solchen bekannten Dichtmanschetten wird der Basisteil am Rand der Öffnung in der Metall- oder Kunststoffplatte anvulkanisiert oder angeklebt. Die Montage dieser Platten mit der Dichtmanschette in der Dacheindeckung ist dem Fachmann bekannt. Das Einvulkanisieren ist ein teures Verfahren, da zunächst die Metallplatten vorbehandelt werden müssen. Dann müssen sie in große, die Metallplatte aufnehmende Formen gelegt werden, damit anschließend unter hohem Druck der elastomere oder thermoplastische Werkstoff in die Form eingespritzt werden kann, um seine Form zu erhalten und an den Metallplatten unlösbar anzuvulkanisieren. Da die Metallplatten wesentlich größer sein müssen als die Dichtmanschette, werden sehr große Formen und schwere Herstellanlagen benötigt. Neben dem teuren Herstellungsprozeß sind auch die Lager- und Transportkosten erheblich, da die großvolumigen Bauteile viel Platz beanspruchen und die Metallplatten zusätzlich zur Gummifabrikation und wieder zurück transportiert werden müssen.

Aus der US 3 677 576 A ist eine Dichtmanschette für Rohrdurchführungen bekannt, deren zur Befestigung vorgesehener Rand eine nach unten offene Nut aufweist, wobei die im Querschnitt V-förmige Nut von zwei Schenkeln begrenzt ist. Der bezüglich der vertikalen Achse der Manschette innere Schenkel besitzt einen wulstförmigen Rand, der andere Schenke ist als Dichtlippe ausgeführt. Diese Manschette wird mit einem metallischen Flansch verbunden, der eine domartige Kuppel mit einer zentralen Durchführöffnung besitzt, deren Rand zur Bildung einer nach oben offenen, im Querschnitt U-förmigen Ringnut umgebördelt ist. Zur Montage dieser Dichtmanschette wird an der Unterseite der Kuppel ein Amboß angesetzt. Der innere Schenke mit dem wulstartigen Rand wird in die nach oben offene Nut eingesetzt, worauf der umgebördelte innere Schenke dieser Nut mit Hilfe des genannten Ambosses so verformt wird, daß der erwähnte Schenkel in der genannten Nut klemmend gehalten ist. Der äußere Schenkel der im Querschnitt V-förmigen, nach unten offenen Nut liegt als Dichtlippe auf der Kuppel (12) auf. Sowohl die konstruktive Gestaltung des Flansches mit der Kuppel und der inneren U-förmigen, nach oben offenen Nut wie auch die Montage sind sehr aufwendig, was aufzuzeigen im einzelnen sich hier wohl erübrigen dürfte.

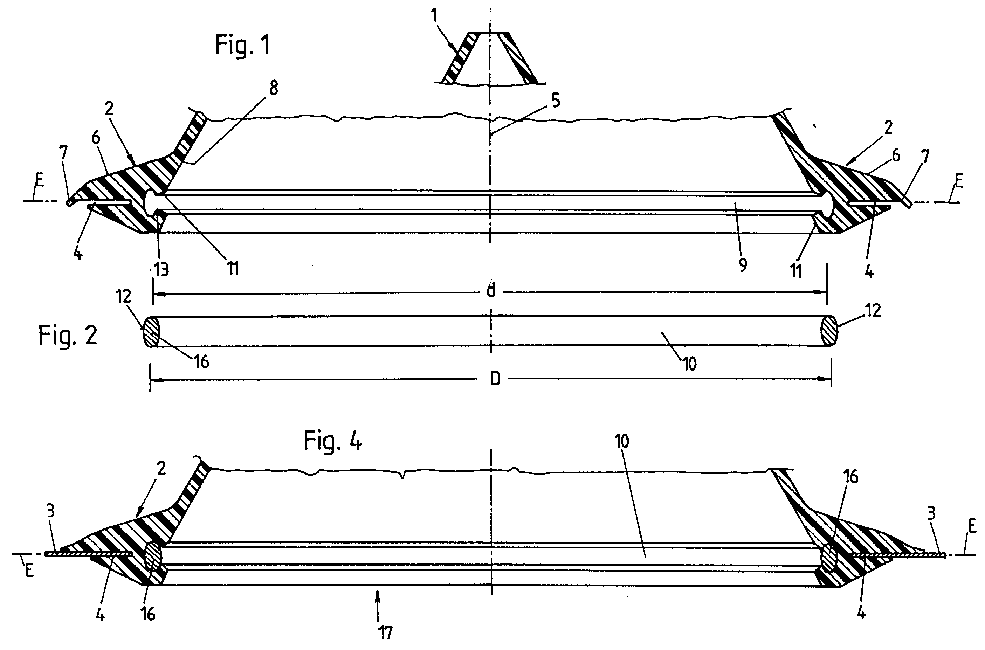

Die US 4 278 262 A zeigt und beschreibt eine Dichtmanschette für Drehgelenke, wobei die Dichtmanschette mit von außen inseitig angelegten Bändern, die von flachen Nuten der Dichtmanschette aufgenommen sind, mit dem jeweiligen Konstruktionsteil verbunden sind. Diese Befestigungsbänder sind zwar in den Fig. 2 und 4 dargestellt, jedoch nicht mit Hinweisziffern versehen und auch in der Beschreibung nicht näher ausgeführt. Die beiden Maschinenteile Xa und Xc sind gegeneinander gelenkig gelagert. Die Dichtmanschette hat hier primär die Aufgabe, das Eindringen von Schmutz in das Maschinengelenk zu verhindern.

Was schließlich die DE 42 21 762 A1 betrifft, so zeigt und beschreibt diese eine Schalthebellagerung, bei welcher gelenkig gelagerte Maschinenteile von einer Dichtmanschette zum Teil überdeckt sind, die hier ebenfalls die Aufgabe hat, das Eindringen von Schmutz in die Gelenkteile und auch den unmittelbaren direkten Zugriff zu unterbinden. Die Randausbildung dieser Dichtmanschette ist in dieser Veröffentlichung nicht näher beschrieben, und die Darstellung läßt auch keine Einzelheiten erkennen. An solche Dichtmanschetten für gelenkig gelagerte Maschinenteile werden, was ihre Dichtheit betrifft, nur geringe Anforderungen gestellt, da sie ja in der Regel nur in Innenräumen verwendet werden, wie im vorliegenden Fall in Verbindung mit der Schaltwelle des Wechselgetriebes bei Kraftfahrzeugen. Das gilt auch für die Dichtmanschette nach DD 259 520 A3, die ebenfalls eine Schalthebelabdichtung für Kraftfahrzeuge zeigt und beschreibt, wobei weder aus der Beschreibung noch aus den Figuren Einzelheiten der Ränder der Dichtmanschette zu erkennen sind.

Die Erfindung geht von diesem Stand der Technik aus und sie zielt darauf ab, hier eine Verbesserung vorzuschlagen, dank der die Dichtmanschette bzw. deren Basisteil unabhängig vom Durchmesser des jeweils durchzuführenden Rohres und für alle Dachneigungen auf einfache Weise dicht und dauerhaft mit der Metallplatte verbindbar ist, und dies unmittelbar vor Ort an der Baustelle. Die Erfindung löst diese Aufgabe durch jene Maßnahmen, die Inhalt und Gegenstand des kennzeichnenden Teiles des Anspruches 1 sind.

Um die Erfindung zu veranschaulichen, wird sie anhand der Zeichnung näher beschrieben, ohne die Erfindung auf das gezeigte Ausführungsbeispiel einzuschränken. Es zeigen:
- Fig. 1: einen vertikalen Längsschnitt durch eine Dichtmanschette in verkürzter Darstellung;
- Fig. 2: einen Querschnitt durch den Spannring und

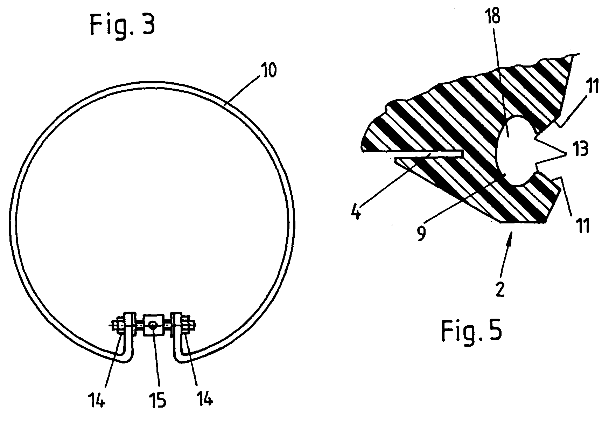

- Fig. 3: eine Draufsicht auf den Spannring in einer gegenüber Fig. 2 verkleinerten Darstellung;
- Fig. 4: einen vertikalen Längsschnitt durch die Dichtmanschette nach Fig. 1 nach ihrer Festlegung an einer Metallplatte und
- Fig. 5: ein Detail in einem gegenüber den anderen Figuren vergrößerten Maß stab.

Die Dichtmanschette nach Fig. 1, die aus einem witterungsbeständigen elastomeren oder thermoplastischen Werkstoff gefertigt ist, weist einen Hohlkegel 1 auf und einen Basisteil 2, mit dem die Dichtmanschette am Rand einer kreisrunden Öffnung in einer Metallplatte 3 festlegbar ist. Dieser Basisteil 2 ist gegenüber der Wandstärke des Hohlkegels verdickt und besitzt eine umlaufende, im Querschnitt schlitzförmige Ausnehmung 4, deren Schlitzöffnung nach außen gerichtet ist. Die Weite dieser im Querschnitt schlitzförmigen Ausnehmung 4 entspricht etwa der Stärke der Metallplatte 3. Die gedachte Mittelebene E dieser im Querschnitt schlitzförmigen und umlaufenden Ausnehmung 4 ist im wesentlichen rechtwinkelig zur Mittelachse 5 des Hohlkegels 1 angeordnet. Der oberhalb der umlaufenden, im Querschnitt schlitzförmigen Ausnehmung 4 liegende Abschnitt 6 des Basisteiles 2 weist eine umlaufende Dichtlippe 7 auf, die über die Ausnehmung 4 hinausragt. Der freie Rand dieser Dichtlippe 7 erstreckt sich über die Schlitzöffnung und ist von dieser in radialer Richtung distanziert. Der Basisteil 2 weist an seiner Innenseite 8 und in der gedachten Mittelebene E der umlaufenden Ausnehmung 4 eine zur Mittelachse 5 des Hohlkegels 1 hin offene Nut auf, die der Aufnahme eines Spannringes 10 dient. Der der offenen Seite benachbarte Teil der Nut 9 ist von Kegelringflächen 11 begrenzt und der daran anschließende Abschnitt 18 der Nut 9, der der Aufnahme des Spannringes 10 dient, ist korrespondierend zumindest zur äußeren Begrenzungsfläche 12 des Spannringes 10 ausgebildet. Die Kegelringflächen 11 gehen über eine höckerartige Erhebung in den der Aufnahme des Spannringes 10 dienenden Abschnitt 18 der Nut 9 über.

Der Spannring 10 ist als offener Ring ausgebildet, dessen mittlerer Durchmesser D größer ist als der mittlere Durchmesser d der umlaufenden Nut 9. Die offenen Enden 14 des Spannringes 10 sind gegen das Innere dieses Ringes abgewinkelt und voneinander distanziert. An diesen abgewinkelten Enden 14 des Spannringes 10 kann ein Spannschloß 15 festgelegt sein. Die Querschnittsfläche 16 des Spannringes 10 ist zweckmäßigerweise etwas größer als die Querschnittsfläche des seiner Aufnahme dienenden Abschnittes 18 der Nut 9.

Zur Montage der Dichtmanschette an der Metallplatte 3 wird der elastische Basisteil 2 zusammengedrückt und in die kreisförmige Öffnung in der Metallplatte 3 eingeführt, und zwar in der Weise, daß der Rand dieser Öffnung von der schlitzförmigen Ausnehmung 4 aufgenommen wird (Fig. 4). Dann wird mittels eines Werkzeuges oder des Spannschlosses 15 der Spannring 10 auf einen Durchmesser verringert, damit er von unten her - Pfeil 17 - in den Basisteil 2 einführbar ist, bis seine Ebene in der gedachten Mittelebene E liegt. Dann wird das Spannschloß 15 betätigt bzw. werden die Enden 14 des Spannringes 10 freigegeben, so daß er sich auf seinen ursprünglichen Durchmesser D aufweitet und dadurch in die Nut 9 eindringt, wobei dieses Eindringen durch die Kegelringflächen 11 der Nut 9 erleichtert wird. Dabei gelangt dieser Spannring 10 über die höckerartigen Erhebungen 13 und unter Aufweitung der Nut 9 in den für seine Aufnahme vorgesehenen Abschnitt 18. Da die Querschnittsfläche 16 des Spannringes 10 größer ist als die Querschnittsfläche des für seine Aufnahme vorgesehenen Abschnittes 18 der Nut 9, wird die Nut 9 etwas aufgeweitet und aufgespreizt, wodurch die Wangen der im Querschnitt schlitzförmigen Ausnehmungen 4 fest an die Metallplatte 3 angedrückt werden.

Die Befestigung und Abdichtung der Dichtmanschette gegenüber der Metallplatte 3 wird einerseits bewirkt durch die Spreizwirkung, die der Spannring 10 ausübt, dadurch, daß seine Querschnittsfläche größer ist als die Querschnittsfläche des Abschnittes 18 der Nut 9, andererseits dadurch, daß der Spannring 10 in radialer Richtung eine Spannkraft ausübt, wobei dadurch der Basisteil 2 gegen die Wandung der Öffnung in der Metallplatte 3 gedrückt wird. Die Dichtwirkung wird dabei vergrößert durch die oberhalb der Metallplatte 3 liegende Dichtlippe 7, die aufgrund ihrer oben geschilderten und dargestellten Ausbildung eine Vorspannung gegenüber der Metallplatte aufweist. Diese Dichtlippe 7 dient auch der Erleichterung der Montage. Sie wird auf die Metallplatte 3 aufgelegt und dann kann der Basisteil 2 auf den Rand der Öffnung der Metallplatte 3 aufgeschoben werden, wobei der Rand dieser Öffnung in die Ausnehmung 4 umfangsseitig eintritt.

Der Spannring 10 kann zweckmäßigerweise aus Federstahl gefertigt sein. Die durch die angegebenen Durchmesserverhältnisse erzielbare Verspannung übt zusätzlich einen Druck auf die Stirnkante der Öffnung in der Metallplatte 3 aus und sichert so den zuverlässigen und dauerhaften Halt. Anstelle von Federstahl kann auch ein geeigneter federnder Kunststoff für den Spannring 10 eingesetzt werden. Die Platte 3 kann auch aus Kunststoff oder einem anderen geeigneten Material gefertigt sein.

Durch die Kombination der beiden oben erwähnten Dichtfunktionen kann auch bei einem relativ weichen flexiblen Material, aus dem die Dichtmanschette gebildet wird, ein verläßlicher und dauerhafter Sitz auf der Metallplatte und eine ausreichende Abdichtung erzielt werden.

### Legende zu den Hinweisziffern:

- 1: Hohlkegel
- 2: Basisteil
- 3: Metallplatte
- 4: Ausnehmung
- 5: Mittelachse
- 6: Abschnitt
- 7: Dichtlippe
- 8: Innenseite
- 9: Nut
- 10: Spannring
- 11: Kegelringfläche
- 12: äußere Begrenzungsfläche
- 13: höckerartige Erhebung
- 14: Ende
- 15: Spannschloß
- 16: Querschnittsfläche
- 17: Pfeil
- 18: Abschnitt

## Patentansprüche

1. Dichtmanschette für Rohrdurchführungen an Dachflächen mit einem Hohlkegel zur Aufnahme des Rohres und einem ringförmigen Basisteil zur Festlegung der Dichtmanschette am Rand einer in einer Metall- oder Kunststoffplatte vorgesehenen kreisrunden Öffnung und Hohlkegel und Basisteil aus einem elastomeren oder thermoplastischen Werkstoff gefertigt und einstückig ausgebildet sind und der Basisteil eine umlaufende Ausnehmung (4) aufweist und der oberhalb der Ausnehmung liegende Abschnitt eine umlaufende Dichtlippe bildet, dadurch gekennzeichnet, daß die Ausnehmung (4) im Querschnitt schlitzförmig gestaltet ist mit einer nach außen gerichteten Schlitzöffnung und die gedachte Mittelebene (E) dieser im Querschnitt schlitzförmigen Ausnehmung (4) im wesentlichen rechtwinkelig zur Mittelachse (5) des Hohlkegels (1) angeordnet ist und die Dichtlippe (7) über die schlitzförmige Ausnehmung (4) hinausragt, wobei sich deren freier äußerer Rand über die Schlitzöffnung erstreckt.

2. Dichtmanschette nach Anspruch 1, dadurch gekennzeichnet, daß der freie äußere Rand der umlaufenden Dichtlippe (7) von der Schlitzöffnung in radialer Richtung distanziert ist.

3. Dichtmanschette nach Anspruch 1, dadurch gekennzeichnet, daß der Basisteil (2) an seiner Innenseite (8) und in der Mittelebene (E) der umlaufenden, im Querschnitt schlitzförmigen Ausnehmung (4) eine zur Mittelachse (5) des Hohlkegels (1) hin offene Nut (9) aufweist zur Aufnahme eines Spannringes (10).

4. Dichtmanschette nach Anspruch 3, dadurch gekennzeichnet, daß der der offenen Seite benachbarte Teil der Nut (9) von Kegelringflächen (11) begrenzt ist und der daran anschließende Abschnitt (18) der Nut (9), der der Aufnahme des Spannringes (10) dient, im wesentlichen korrespondierend zumindest zur äußeren Begrenzungsfläche (12) des Spannringes (10) ausgebildet ist.

5. Dichtmanschette nach Anspruch 4, dadurch gekennzeichnet, daß die Kegelringflächen (11) über eine höckerartige Erhebung (13) in den der Aufnahme des Spannringes (10) dienenden Abschnitt (18) der Nut (9) übergehen.

6. Dichtmanschette nach Anspruch 3, dadurch gekennzeichnet, daß der Spannring (10) als offener Ring ausgebildet ist, dessen mittlerer Durchmesser (D) größer ist als der mittlere Durchmesser (d) der umlaufenden Nut (9).

7. Dichtmanschette nach Anspruch 6, dadurch gekennzeichnet, daß die offenen Enden (14) des Spannringes (10) gegen das Innere dieses Ringes abgewinkelt sind.

8. Dichtmanschette nach Anspruch 7, dadurch gekennzeichnet, daß an den abgewinkelten Enden (14) des Spannringes (10) ein Spannschloß (15) festgelegt ist.

9. Dichtmanschette nach einem der Ansprüche 1 bis 8, dadurch gekennzeichnet, daß der die Ausnehmung (4) und die innseitig liegende Nut (9) aufweisende Basisteil (2) gegenüber der Wandstärke des Hohlkegels (1) verdickt ist.

10. Dichtmanschette nach einem der Ansprüche 4 oder 5, dadurch gekennzeichnet, daß die Querschnittsfläche (16) des Spannringes (10) größer ist als die Querschnittsfläche des seiner Aufnahme dienenden Abschnittes (18) der Nut (9).
